# EUROPEAN PATENT APPLICATION

(11) **EP 2 433 786 A2**
(43) Date of publication of application: **28.03.2012**
(21) Application number: 11182378.7
(22) Date of filing: 22.09.2011
(51) Int. Cl.: B29D 30/06, B60C 19/00

(54) **Method for making pneumatic and tire with foam noise damper or an electronic device**

(30) Priority: 24.09.2010 US 889797
(71) Applicant: The Goodyear Tire & Rubber Company, Akron, OH 44316-0001 (US)
(72) Inventor: Agostini, Giorgio, L - 7733 Colmar-Berg (LU); Bormann, René Louis, L - 7462 Moesdorf (LU); Garcia Malagon, Juan, L - 8223 Mamer (LU); Lauer, Wolfgang Albert, L - 7570 Mersch (LU)
(74) Representative: Kutsch, Bernd

(57) **Abstract**

A pneumatic tire (10) and a method of manufacturing such a tire is disclosed. The tire (10) comprises two spaced beads, a tread portion (13), a pair of sidewalls extending radially inward from the axial outer edges of the tread portion (13) to join respective beads, the axial outer edges of the tread portion (13) defining a tread width, a carcass (12), and at least one foamed structure (18) disposed radially inwardly of the carcass (12). The foamed structure (18) comprises a preferably co-vulcanized foamed rubber composition having a density ranging from 0.1 to 1 g/cm³ and an abraded surface (19). The tire further comprises a foam noise damper (22) and/or an electronic device disposed on the abraded surface (19).

## Description

### Background of the Invention

Government regulations and consumer preferences continue to compel a reduction in the acceptable noise levels produced from the tires of passenger vehicles. One source of road noise is resonance within the air chamber enclosed by the innermost surface of the tire and the rim. One type of effort to reduce tire noise is damping the sound from the air vibration in the air chamber, which efforts have focused mainly on altering the innermost surface of the tire adjacent the tire carcass. Shortcomings in these previous efforts, as well as new stricter regulations regarding noise reduction, have provided a need for further improvements to the tire to reduce sound transmission due to vibrations within the air chamber.

Carcasses of pneumatic green tires are built as a series of layers of flexible high modulus cords encased in a low modulus rubber. An innerliner is positioned to form the innermost surface of the tire. The green tire is cured in a curing press using a curing bladder, which forces expansion of the tire. During curing, the innerliner expands with the carcass, which is forced against the indentations in the curing mold to form the tread of the tire, and all components are co-cured so as to provide a substantially cohesive bond between one and another.

The innerliner for a pneumatic tubeless tire is typically formed from a compound containing for example a halobutyl rubber due to its good barrier properties. Before the tire is cured, the entire inner surface of the innerliner and/or the outer surface of the curing bladder are coated with a release agent. The release agent is commonly referred to as a "lining cement" when used on the surface of the innerliner, and as a "bladder lube" or "bladder spray" when used on the curing bladder. The release agent facilitates removal of the curing bladder from the innerliner after curing so that the innerliner is not damaged.

Thus, prior to bonding a foam noise damper to the cured innerliner, in prior art methods the innerliner must be cleaned to remove contaminants present on the innerliner surface from the molding operation. In particular, the release agent must be removed from the innerliner surface. Solvents have typically been used for this cleaning operation. Solvents effective for removing the release agents contain hazardous air pollutants. These solvents are thus subject to environmental regulations, which have become more stringent in the recent past. It would thus be desirable to eliminate the need for solvent cleaning of the innerliner surface in order to comply with strict environmental regulations. In addition, solvent cleaning is labor intensive and costly due to its hazardous nature, such that significant cost savings may be realized by elimination of the solvent cleaning process. Alternatively, preparation of the innerliner for application of a foam noise damper may involve buffing the innerliner to provide a surface suitable for adhesion, see for example US-B- 7,669,628.

### Summary of the Invention

The invention relates to a method in accordance with claim 1 and to a tire in accordance with claim 8.

Dependent claims refer to preferred embodiments of the invention.

In one preferred aspect, the present invention is directed to a method for making a pneumatic tire having a foam noise damper, the pneumatic tire comprising two spaced inextensible beads; a ground contacting tread portion; a pair of individual sidewalls extending radially inward from the axial outer edges of said tread portion to join the respective beads, the axial outer edges of the tread portion defining a tread width; a supporting carcass for the tread portion and sidewalls; the method comprising the steps of:
forming at least one foamed structure disposed radially inwardly of the carcass, the foamed structure comprising a co-vulcanized foamed rubber composition having a density ranging from 0.1 to 1 g/cm³;
at least partially abrading the at least one foamed structure to form an abraded surface; and
disposing a foam noise damper on the abraded surface.

In another preferred aspect, the invention is further directed to a pneumatic tire comprising two spaced inextensible beads; a ground contacting tread portion; a pair of individual sidewalls extending radially inward from the axial outer edges of said tread portion to join the respective beads, the axial outer edges of the tread portion defining a tread width; a supporting carcass for the tread portion and sidewalls; at least one foamed structure disposed radially inwardly of the carcass, the foamed structure comprising a co-vulcanized foamed rubber composition having a density ranging from 0.1 to 1 g/cm³ and an abraded surface; and a foam noise damper disposed on the abraded surface.

### Brief Description of the Drawings

The invention will be more readily understood with respect to the accompanying drawings wherein:

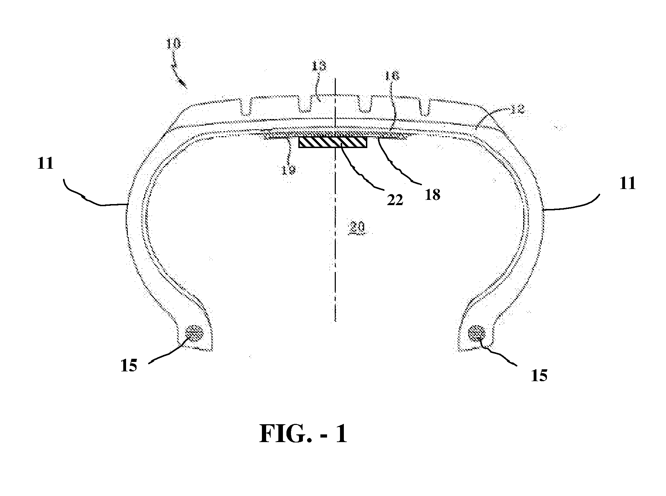

FIG. 1 is a cross-sectional view of one embodiment of a tire having foam noise damper attached via an abraded integral foamed structure according to the present invention.

### Description of the Invention

In accordance with the present invention, there is provided a method for making a pneumatic tire having a foam noise damper, the pneumatic tire comprising two spaced inextensible beads; a ground contacting tread portion; a pair of individual sidewalls extending radially inward from the axial outer edges of said tread portion to join the respective beads, the axial outer edges of the tread portion defining a tread width; a supporting carcass for the tread portion and sidewalls; the method comprising the steps of:
forming at least one foamed structure disposed radially inwardly of the carcass, the foamed structure comprising a co-vulcanized foamed rubber composition having a density ranging from 0.1 to 1 g/cm³;
at least partially abrading the at least one foamed structure to form an abraded surface; and
applying a foam noise damper to the abraded surface. Instead of a foam noise damper (or together with the foam noise damper), an electronic device such as a RFID device or a pressure sensing device may be applied.

There is further provided a pneumatic tire comprising two spaced inextensible beads; a ground contacting tread portion; a pair of individual sidewalls extending radially inward from the axial outer edges of said tread portion to join the respective beads, the axial outer edges of the tread portion defining a tread width; a supporting carcass for the tread portion and sidewalls; at least one foamed structure disposed radially inwardly of the carcass, the foamed structure comprising a co-vulcanized foamed rubber composition having a density ranging from 0.1 to 1 g/cm³ and an abraded surface; and a foam noise damper disposed on the abraded surface.

The integral foamed structure can be disposed in various inner portions of the tire. For example it can extend from bead to bead for protection of both the tread and sidewall portions of the tire or it can simply be selectively and locally disposed on the inner surface of the tire.

The foamed structure is co-vulcanized with the tire in order to be integral with the dynamic tire construction. It is built as a solid unvulcanized layer containing a heat activatable blowing agent onto the inner portion of the green, unvulcanized tire over a building form and then shaped, molded and heated under pressure to simultaneously co-vulcanize therewith. The pressure is generally supplied by a shaping bladder positioned within the tire to press and shape it outwardly against a mold. The foamed structure is formed by heat activating the blowing agent during the vulcanization process to simultaneously expand said adherent solid layer. Typical vulcanization temperatures range from 90ºC to 200ºC. Thus, the foamed structure is formed substantially simultaneously with the co-vulcanization step in order to enhance the integral tire construction. The foamed structure itself is therefore integral with the tire construction, instead of being a simple laminate that is glued or otherwise attached to a previously cured tire.

The integral foamed structure of the tire is of such a gauge as to not occupy any substantial inner portion of the inflated tire. In one embodiment, the foamed structure has a thickness ranging from 1 to 25 mm.

In one embodiment, the foamed structure has a density ranging from 0.1 to 1 g/cm³. This density is for the foamed, fully loaded compound, including elastomers and additives such as carbon black, silica, zinc oxide, curatives and oils. In another embodiment, the foamed structure has a density ranging from 0.2 to 0.9 g/cm³. In another embodiment, the foamed structure has a density ranging from 0.2 to 0.8 g/cm³.

In one embodiment, the foamed structure has a porosity ranging from 20 to 80 percent by volume. In another embodiment, the foamed structure has a porosity ranging from 30 to 70 percent by volume. As defined in the present invention, porosity is the fraction of the total volume of the foamed structure not occupied by the rubber compound. In other words, the porosity is the volume fraction of the foamed structure occupied by void space in the pores and cells formed by the foaming agent.

The foamed structure is foamed with a blowing agent. The blowing agents used in the practice of this invention for the manufacture of the pneumatic tire are those which liberate gases upon heating. Representative examples of such agents are those which liberate gases such as nitrogen or carbon dioxide and cause the formation of the integral closed cell internal layer. Usually agents which liberate nitrogen are preferred. Such blowing agents are compounds which give off gases upon being triggered by the vulcanization temperatures, representative of which are nitro, sulfonyl and azo compounds such as dinitrosopentamethylene tetramine, N,N'-dimethyl-N,N'-dinitrosophthalamide, azodicarbonamide, sulfonyl hydrazides such as benzenesulfonyl hydrazide, toluenesulfonyl hydrazide and p,p'-oxy-bis-(benzenenesulfonyl)hydrazide and sulfonyl semicarbazides such as p-toluene sulfonyl semicarbazide and p,p'-oxy-bis-(benzenesulfonyl semicarbazide). Carbon dioxide may be given off by compounds such as ammonium bicarbonate and sodium bicarbonate.

In order to obtain the desired density and porosity in the foamed structure, the amount of blowing agent may vary. In one embodiment, the amount of blowing agent used in the rubber composition of the foamed structure ranges from 5 to 25 phr. In another embodiment, the amount of blowing agent ranges from 10 to 25 phr.

The vulcanized rubber tire and the co-vulcanized integral foamed structure can be of various cured or vulcanized rubbers such as natural rubber and synthetic rubber and their mixtures or blends. For example, they can be rubbery styrene-butadiene copolymers, butadiene-acrylonitrile copolymers, cis-1,4-polyisoprene, polybutadiene, isoprene-butadiene copolymers, butyl rubber, halogenated butyl rubber such as chloro or bromo butyl rubber, ethylene-propylene copolymers, ethylene-propylene-diene terpolymers and polyurethane elastomers. Typically the various polymers are cured or vulcanized by normal curing methods and recipes such as with sulfur, or with peroxides in the case of the ethylene-propylene copolymers, or with primary diamines in the case of polyurethane elastomers. The sulfur cured or vulcanized natural rubber and synthetic rubbery polymers are preferred such as styrene-butadiene rubber, cis-1,4-polyisoprene, polybutadiene, butyl rubber, chlorobutyl rubber, and bromobutyl rubber.

It is readily understood by those having skill in the art that the rubber compositions used in the integral foamed structure would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

The rubber compound may contain various conventional rubber additives. Typical additions of carbon black comprise about 20 to 200 parts by weight per 100 parts by weight of diene rubber (phr), preferably 50 to 100 phr.

A number of commercially available carbon blacks may be used. Included in the list of carbon blacks are those known under the ASTM designations N299, S315, N326, N330, M332, N339, N343, N347, N351, N358, N375, N539, N550 and N582. Processing aids may be present and can include, for example, aromatic, naphthenic, and/or paraffinic processing oils. Typical amounts of tackifying resins, such as phenolic tackifiers, range from 1 to 3 phr. Silica, if used, may be used in an amount of 5 to 80 phr, often with a silica coupling agent. Representative silicas may be, for example, hydrated amorphous silicas. Typical amounts of antioxidants comprise 1 to 5 phr. Representative antioxidants may be, for example, diphenyl-p-phenylenediamine, polymerized 1,2-dihydro-2,2,4-trimethylquinoline and others, such as, for example, those disclosed in the Vanderbilt Rubber Handbook (1990), pages 343 through 362. Typical amounts of antiozonants comprise 1 to 5 phr. Representative antiozonants may be, for example, those disclosed in the Vanderbilt Rubber Handbook (1990), pages 363 through 367. Typical amounts of fatty acids, if used, which can include stearic acid comprise 0.5 to 3 phr. Typical amounts of zinc oxide comprise 2 to 10 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 5 phr, or even, in some circumstances, up to 8 phr, with a range of from 3 to 5 being preferred.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from 0.5 to 2.5 phr. In another embodiment, combinations of two or more accelerators which is generally used in the larger amount (0.5 to 2.0 phr), and a secondary accelerator which is generally used in smaller amounts (0.05 to 0.50 phr) in order to activate and to improve the properties of the vulcanizate. In addition, delayed action accelerators may be used which are not affected by normal processing temperatures but produce satisfactory cures at ordinary vulcanization temperatures. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The tire can be built, shaped, molded and cured by various methods, which will be readily apparent to those having skill in such art. As noted previously herein, the foamed structure is preferably co-vulcanized with the tire in order to be integral with the dynamic tire construction. It is built as a solid unvulcanized layer containing the heat activatable blowing agent onto the inner portion of the green, unvulcanized tire over a building form and then shaped, molded and heated under pressure to simultaneously co-vulcanize therewith. The pressure is generally supplied by a shaping bladder positioned within the tire to press and shape it outwardly against a mold. The foamed structure is formed by heat activating said blowing agent during the vulcanization process to simultaneously expand said adherent solid layer. Typical vulcanization temperatures range from 90ºC to 200ºC. Thus, the foamed structure is formed substantially simultaneously with the co-vulcanization step in order to enhance the integral tire construction. To do this, an unshaped and unvulcanized tire is built around a tire building drum by first building over the drum an inner layer of rubber composition comprising the blowing agent and optionally a non-foamed innerliner. Over this initial layer of rubber the remainder of the tire is built including the lay-up of the rubberized fabric plies, bead portions, sidewall and tread. The fabricated tire is then removed from the building form and shaped, molded and vulcanized in the tire.

The inner layer of especially compounded rubber expands as the blowing agent is heat activated during the vulcanization process to form the foamed structure. However, this expansion is suppressed during the tire molding by the presence of the shaping bladder which presses against the interior of the tire owing to the significant pressure of the bladder. The pressure in the bladder is maintained higher than the pressure of the blowing agent being released in the foamed structure. Once the pressure in the bladder is released, the foamed structure is free to expand to its final conformation, which may include open and/or closed cells.

Referring now to the drawings it is shown that a pneumatic rubber tire can be prepared by building an unshaped and unvulcanized basic tire 10 containing what are to become the customary tread portion 13, sidewalls 11 and carcass 12, which typically contains plies (not shown) to back and reinforce the tread and sidewall portions, and particularly a foamed structure 18 which contains a heat activatable blowing agent. The green tire is then placed in a mold where it is shaped, molded and heated under pressure to simultaneously co-vulcanize the tire and foamed structure and also activate the blowing agent. After cure, the foamed structure 18 is abraded to form an abraded surface 19. A foam noise damper 22 is then disposed on abraded surface 19 of the foamed structure 18.

FIG. 1 depicts in cross-section one embodiment of a tire 10 in accordance with the present invention. Tire 10 includes a carcass 12 having a tread 13 disposed on the outermost surface, which tread 13 is the portion of the tire 10 that contacts the ground during operation of the tire 10. As is known in the art, the carcass 12 may include one or more plies of cords (not shown) and the carcass wraps the bead portions 15 of the tire. A foamed structure 18 is disposed inside the carcass 12 with abraded surface 19 facing the air chamber 20, with the foamed structure 18 extending circumferentially. The tire 10 includes innerliner layer 16 disposed adjacent the carcass 12 and foamed structure 18 disposed adjacent innerliner 16. Foam noise damper 22 is disposed on abraded surface 19 of foamed structure 18; foam noise damper 22 is thus exposed to the air chamber 20 of the tire 10.

In one embodiment the foamed structure may extend circumferentially about the inside of the tire and axially from bead to bead. In another embodiment, the foamed structure may extend circumferentially about the inside of the tire and only partially across the width of the tire. In one embodiment, the foamed structure may extend axially no more than 50 percent of the tread width. In another embodiment, the foamed structure may extend axially in a range of from about 10 percent to 50 percent of the tread width. In another embodiment, the foamed structure may be substantially centered axially on the axial centerline of the tire. In another embodiment, multiple circumferential foamed structures may be used, disposed so as to equalize the load on the tire and maintain dynamic balance.

Abrasion of the foamed structure 18 to form abraded surface 19 can be accomplished by various means such as by buffing with wire wheel, abrasive grinding wheel or shot blast treatment to abrade away a part of the surface to leave it both clean and roughened. A roughened rubber surface as formed in abraded surface 19 tends to aid in improving adhesion of foam noise damper 22 in the practice of this invention. In one embodiment, abrasion of the foam noise damper to form abraded surface 19 includes exposure of an open cell foam surface as the abraded surface 19.

The foam noise damper 22 is disposed on the abraded surface 19 radially inward of the tread 13, as shown in FIG. 1. Accordingly, to deform easily during running and not to affect the running performance such as steering stability, the material of the damper is preferably a light-weight low-density flexible material, e.g., foamed rubber, foamed synthetic resins, cellular plastics and the like. In the case of foamed materials (or sponge materials), an open-cell type and a closed-cell type can be used, but an open-cell type is preferred. For example, synthetic resin foams such as ether based polyurethane foam, ester based polyurethane foam, polyethylene foam and the like; rubber foams such as chloroprene rubber foam, ethylene-propylene rubber foam, nitrile rubber foam, silicone rubber foam and the like can be used. Especially, polyethylene foam, polyurethane foams including ether based polyurethane foam and the like are preferably used in view of noise damping effect, lightness in weight, easy control of expansion rate and durability.

In one embodiment, an open-cell type foam material, more specifically, polyurethane foam is used.

Depending on the environment where the tire is used, there is a possibility that the air which fills the tire cavity to inflate the tire is humid and the water makes condensation in the closed cavity. Accordingly, foam materials which are hard to be hydrolyzed such as ether based polyurethane are suitably used.

Further, in order to prevent water from penetrating into the noise damper, a water repellent treatment can be preferably made on the foam material. Also, a mildewproof treatment can be preferably made.

Furthermore, in order to avoid poison in the emission gas generated when incinerating scrap tires, it is preferred that raw materials not including halogen are used to make the foam material.

By disposing a certain volume of the foam material in the tire cavity, resonances of the air in the cavity can be controlled and vibrations of the tread portion are reduced. Therefore, noise generated from the tire during running can be reduced. In particular, reduction of noise due to tire cavity resonance measured at a frequency of 200 to 300 Hz is desirable.

The foam noise damper has a specific gravity and dimensions suitable to reduce noise level due to tire cavity resonance at 180 to 300 Hz. In one embodiment, the foam has a specific gravity greater in a range of 0.005 to 0.2 (5 to 200 kg/m³). In one embodiment, the foam noise damper has a thickness in the tire radial direction ranging from 10 to 50 mm. In one embodiment, the foam noise damper has a width in the axial tire direction ranging from 30 to 150 mm. In one embodiment, the foam noise damper is disposed circumferentially about the tire.

In one embodiment, the foam noise damper is fixed to the abraded surface of the foamed structure using an adhesive applied directly or as double-sided adhesive tape.

As to the adhesive, in one embodiment an adhesive tape having a base tape with a coat or layer of an adhesive material on one side and a coat or layer of an adhesive material on the other side may be used. In one embodiment, an adhesive tape having no base tape and made up of only double layers of different adhesive materials may be used. In one embodiment, an adhesive made up of only a single layer of an adhesive material may be used.

In the case of adhesive tape, the base tape may be, for example: plastic film such as polyester; sheet of plastic foam such as acrylic foam; nonwoven fabric or bonded material; a woven textile; and the like.

As to the adhesive material, for example, a rubber-based adhesive comprising natural rubber and/or synthetic rubber and additives, e.g. tackifier, softener, age resistor and the like; an acrylic pressure sensitive adhesive comprising a plurality of copolymers of an acrylic ester and a polyfunctional monomer having different glass-transition temperatures (containing pressure sensitive adhesives of high heat resistant type, flame resistant type and low-temperature adhesion type); a silicone pressure sensitive adhesive comprising a silicone rubber and a resin; a polyether adhesive; a polyurethane adhesive and the like may be suitably used.

The use of a thermosetting adhesive comprising a thermosetting resin, e.g. epoxy resin or the like is not preferred in view of the production efficiency because the adhesive needs to be heated up to about 130ºC for about 30 minutes.

As to the adhesive materials, it is possible to use the same adhesive material, but, it is desirable to use different types of adhesive materials. For example, a rubber adhesive which adheres strongly to the tire rubber, and an acrylic pressure sensitive adhesive which adheres strongly to the noise damper are used on the respective sides of an adhesive tape or adjacently.

Although the description herein has been directed to the attachment of a foam noise damper to the abraded surface, the abraded surface may also serve as an attachment surface for other applications. In one embodiment, an electronic device such as an RFID device and antenna may be attached to the abraded surface. In one embodiment, a pressure sensing device may be attached to the abraded surface.

## Claims

1. A method for making a pneumatic tire, the pneumatic tire comprising two spaced beads, a tread portion (13), a pair of sidewalls (11) extending radially inward from the axial outer edges of the tread portion (13) to join respective beads (15), the axial outer edges of the tread portion defining a tread width, and a carcass (12), the method comprising the steps of:
forming at least one foamed structure (18) radially inwardly of the carcass (12), the foamed structure (18) comprising a preferably co-vulcanized foamed rubber composition having a density ranging from 0.1 to 1 g/cm³;
at least partially abrading the at least one foamed structure (18) to form an abraded surface (19); and
disposing a foam noise damper (22) and/or an electronic device on the abraded surface (19).

2. The method of claim 1 wherein the at least one foamed structure has a density ranging from 0.2 to 0.9 g/cm³ or from 0.2 to 0.8 g/cm³.

3. The method of claim 1 or 2 wherein the at least one foamed structure (18) comprises an integral foamed structure extending circumferentially and radially inward from the carcass (12) and axially from bead to bead.

4. The method of claim 1 or 2 wherein the at least one foamed structure comprises an integral foamed structure extending circumferentially and radially inward from the carcass (12) and axially no more than 50 percent of the tread width.

5. The method of at least one of the previous claims wherein the at least one foamed structure (18) extends axially in a range of from 10 percent to 50 percent of the tread width or in a range of from 20 percent to 40 percent of the tread width.

6. The method of at least one of the previous claims wherein the at least one foamed structure (18) is substantially centered axially on the axial centerline of the tire.

7. The method of at least one of the previous claims further comprising a co-vulcanized innerliner layer (16) disposed between the carcass (12) and the at least one foamed structure (18).

8. A pneumatic tire comprising two spaced beads, a tread portion (13), a pair of sidewalls extending radially inward from the axial outer edges of the tread portion (13) to join respective beads, the axial outer edges of the tread portion (13) defining a tread width, a carcass (12), and at least one foamed structure (18) radially inwardly of the carcass (12), the foamed structure (18) comprising a preferably co-vulcanized foamed rubber composition having a density ranging from 0.1 to 1 g/cm³ and an abraded surface (19), and a foam noise damper (22) and/or an electronic device disposed on the abraded surface (19).

9. The pneumatic tire of claim 8 wherein the at least one foamed structure (18) has a density ranging from 0.2 to 0.9 g/cm³ or from 0.2 to 0.8 g/cm³.

10. The pneumatic tire of claim 8 or 9 wherein the at least one foamed structure (18) comprises an integral foamed structure extending circumferentially and radially inward from the carcass (12) and axially from bead to bead.

11. The pneumatic tire of claim 8 or 9 wherein the at least one foamed structure (18) comprises an integral foamed structure extending circumferentially and radially inward from the carcass (12) and axially no more than 50 percent of the tread width.

12. The pneumatic tire of claim 8 or 9 wherein the at least one foamed structure (18) extends axially in a range of from 10 percent to 50 percent of the tread width or in a range of from 20 percent to 40 percent of the tread width.

13. The pneumatic tire of at least one of the previous claims wherein the at least one foamed structure (18) is substantially centered axially on the axial centerline of the tire.

14. The pneumatic tire of at least one of the previous claims further comprising a co-vulcanized innerliner layer (16) disposed between the carcass (12) and the at least one foamed structure (18).

15. The pneumatic tire of claim 8 wherein the electronic device is an RFID device or a pressure sensing device.
